# EUROPEAN PATENT SPECIFICATION

(11) **EP 0 757 603 B1**
(45) Date of publication and mention of the grant of the patent: **17.07.2002**
(21) Application number: 95918225.4
(22) Date of filing: 18.04.1995
(51) Int. Cl.: B23B 27/16, B23C 5/20

(54) **TOOL HOLDER FOR INSERTS, INCLUDING A RIBBED CLAMPING SURFACE**
WERKZEUGHALTER FÜR SCHNEIDEINSÄTZE, MIT GERIPPTER SPANNFLÄCHE
PORTE-OUTIL POUR PLAQUETTE AMOVIBLE DOTE D'UNE SURFACE DE FIXATION A COTES

(30) Priority: 27.04.1994 SE 9401429
(43) Date of publication of application: 12.02.1997
(73) Proprietor: SANDVIK AKTIEBOLAG, 811 81 Sandviken (SE)
(72) Inventor: BYSTRÖM, Lennart, S-811 52 Sandviken (SE); WIMAN, Jörgen, S-811 52 Sandviken (SE)
(86) International application number: SE9500414
(87) International publication number: WO9529026

(56) References cited:
- WO-A-89/11367
- DE-A- 3 402 547
- DE-A- 3 446 455
- DE-C- 2 547 102

## Description

The present invention relates to an arrangement for the fastening of cutting inserts on insert holders for the cutting machining of primarily metals according to the preamble of claim 1 and as known for example from US-A-2.453.464.

Different cutting inserts and indexable inserts are fastened on tool holders in several different, known ways. The most common is that the insert has a through central hole and that the insert pocket in the holder has a threaded hole. A locking screw is inserted into the centre hole of the insert and is screwed into the hole of the holder by a suitable torque, a shim with a centre hole often being threaded on the screw and placed between the insert and the bottom support surface. Usually, the cutting insert also comprises two mutually, substantially perpendicular abutment surfaces, or three abutment points, for abutting against two of the insert's side surfaces. The disadvantage with this construction is that a certain loose easily occurs after a certain time of use. A further drawback is that one may easily tighten the screw too heavily, thereby damaging it or even causing a rupture.

Other known insert holders have a clamp or similar fastening arrangement, that presses upon the upper side of the insert in order to clamp it in the insert pocket. The pressure force of the clamp can be regulated by a screw. Such constructions may for instance be used for fastening cutting inserts without any central hole, which is the case for inter alia cutting-off inserts.

In order to avoid any play and attain a more stable fastening in general of a cutting insert, constructions have been suggested according to which the lower side of the cutting insert and the bottom support surface have been formed as ribbed surfaces intended to match each other. Such a construction is disclosed in US-A-2 140 941 and another in US-A-2 453 464. However, a drawback of these embodiments is that they necessitate a very considerable amount of grinding of the ribbed surface of either the cutting insert or the holder, or both. A further drawback is that, even if the insert has been secured in a direction perpendicular to the ribs, a vertical play may arise in these constructions just as easily as for two wholly planar abutment surfaces, particularly at machining operations with a tendency to vibrations.

In US-A-4 437 802 it is described how a cutting insert is fastened on a drill, the cutting insert comprising two grooves and the support surface of the drill two corresponding ribs, which are to fit exactly into the grooves and occupy their whole cross-sectional area. Again, the problem is that an axial play may easily arise, particularly if the drill is submitted to vibrations. Moreover, a considerable grinding is required either of the ribs or of the grooves, in order to attain the necessary dimension accuracy.

Thus, a primary object of the present invention is to provide an arrangement for obtaining a stable and play-free fastening of cutting inserts on insert holders, for instance also in the case where the insert has been submitted to vibrations for a long time.

A second object of the present invention is to attain a stable and play-free fixing of cutting inserts on insert holders without any costly and time-consuming grinding.

A third object of the present invention is to avoid the necessity of abutment surfaces or points in the insert pocket, which require a high dimension accuracy.

These and other objects have been achieved by forming the fastening of the cutting insert in the insert holder in accordance with claim 1.

Some preferred embodiments of the invention will now be further described with reference to the appended drawings. These are presented herewith:
Figure 1 shows a holding arrangement according to the present invention in a perspective view obliquely from above.
Figure 2 shows a cross-section of a cutting insert and a holder according to the present invention.
Figure 3 shows an insert holder according to the present invention straight from above.
Figure 4 shows the same cross-section of a cutting insert as in figure 2.
Figure 5 shows the same cross-section of an insert holder as in figure 2.
Figure 6 shows the bottom side of a cutting insert that has been formed according to the present invention, in a perspective view obliquely from above.
Figure 7 shows the top side of the same cutting insert as in figure 6, in a perspective view obliquely from above.

In the figures a cutting insert is designated by 1 or 1' and a holder by 2 or 2'. The cutting insert is made of a suitable hard material, such as coated or uncoated cemented carbide. Also some ceramics and cubic boron nitride may be used. In first hand, the invention is intended for different turning applications, such as longitudinal turning, copying, grooving and parting-off, but it may advantageously also be used for the fastening of milling cutting inserts.

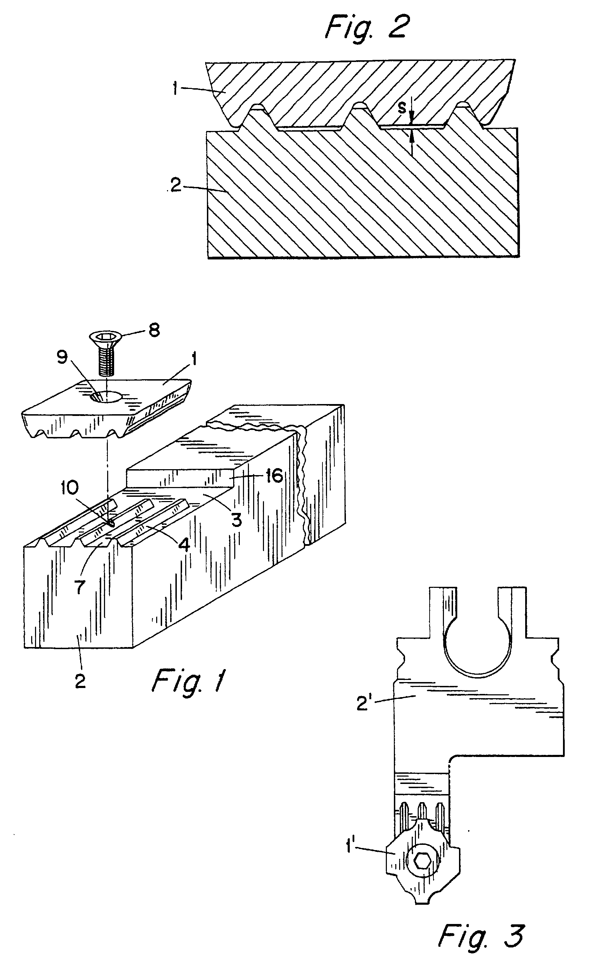

The upper front part of the holder 2 is provided with a plane holding surface 3. On the holding surface are provided elongated ribs 4, which are mutually, substantially parallel. According to figure 1, the ribs extend backwardly from the front surface of the holder and substantially parallel with the longitudinal extension of the holder. However, in principle the ribs may present any arbitrary direction, for instance perpendicularly to the one shown in figure 1. At least that part of the ribs 4 which come into engagement with the insert has a basically constant cross-sectional geometry. This geometry has the form of a trapezoid or more precisely, the form of a truncated, isosceles triangle, whose shape is defined by two side surfaces 5 and a top surface 6. The transition between a side surface 5 and the holding surface 3 is either accomplished along a distinct break line or along a fillet with a small radius, which should be located outside the contact area to the cutting insert 1, 1'. The top angle α of the ribs is suitably between 40 and 80°, preferably between 50 and 70° and in particular between 55 and 65°. Between the ribs extend the part surfaces 7 of the holding surface 3, which are substantially plane and have a width W that suitably corresponds to between 1 and 4 times the base width of the ribs, preferably between 1½ and 2½. The ribs may extend the whole way to the rear border line of the holding surface; however, due to production-technical reasons it is suitable that the ribs terminate a distance D before this border line, preferably via a short transition part where the height of the ribs gradually decreases and finally disappears.

The cutting insert 1, 1' is fastened by a locking screw 8, which is first introduced through the insert's central hole 9 and is then screwed into the threaded hole 10 in the holder 2. Suitably, the centre line of this hole is situated on the longitudinal centre line of a rib. The bottom side of this insert is formed with substantially parallel grooves 11 intended to accomodate the ribs 4. An essential feature of this invention is that these grooves 11 are directly pressed before the sintering of the cemented carbide or another hard material and thus not ground. They have a sector angle β which exactly corresponds to the top angle α of the ribs or that is somewhat smaller than that, however not by more than about 2°, preferably 1°. Of production-technical reasons, the bottoms of the grooves are preferably rounded; of course the rounded part 12 should not intrude upon the side surfaces 13 of the ribs, which surfaces will be in contact with the side surfaces 5 of the ribs. The transition of the grooves to the bottom side 14 of the cutting insert either takes place along a sharp break line or along a small radius. The side surfaces 13 should be completely plane in order to attain a good contact with the side surfaces 5 of the ribs.

As mentioned above, the cutting inserts are directly pressed in their entirety, thus also the grooves 11. Thereby, the surface structure in the grooves will have a certain rugosity, which disappears if ground. The dimensions obtained after sintering and cooling are thereafter taken as set values for the production of the ribs of the holder. A certain grinding of these ribs is not so costly since one single holder may be used for a large amount of cutting inserts.

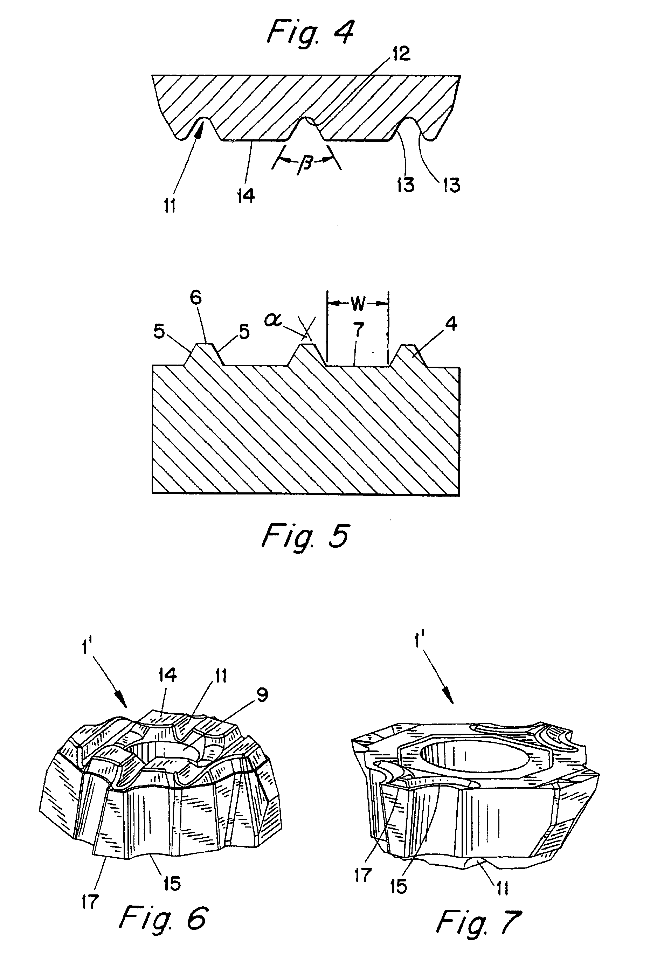

When fastening the cutting insert, this is placed over the ribs 4 in accordance with figures 1 to 5 and is fastened by the screw 8. At this occasion, it is an essential feature of the present invention that no contact arises between the bottom side 14 of the cutting insert and the part surfaces 7 of the holder. As may be seen in figure 2, there is thus a gap s between said surfaces 7 and 14. This gap may lie within the size range >0 (e.g. 0,02 mm) and 0,2 mm. Further, it is an essential feature of the present invention that the tops of the ribs do not reach the bottoms of the grooves, which may also be seen in figure 2. By said two essential features, a squeezing wedge effect is made possible between the side surfaces 5 and 13 of the ribs and grooves, respectively, when the locking screw 8 is tightened. This wedge effect results in a fastening of the insert with a hitherto unattained stability and strength. Thus, for most applications abutment surfaces and abutment points become superfluous, as may be seen in figures 1 and 3. This simplifies the production of the insert pocket. Moreover, the slight surface rugosity of the directly pressed grooves positively influence the strength and endurance of the fixation.

Although it does not constitute a preferred embodiment of the present invention, the cutting insert may also be fastened with a suitable clamping arrangement instead of a screw. In this case, the pressure point of the clamp should be situated straightly above the middle groove.

After an operative cutting edge has been worn out, the insert may be loosened and turned 180° around the central axis of the screw 8, in order to indexate a new cutting edge.

As may be seen primarily in figure 1, the threaded hole 10 of the holder is situated on the middle rib. The reason for the hole being located on a rib instead of for instance on a part surface 7 between two ribs, is that the insert may snap if it is submitted to a force between two support lines. In order to confer to the insert a symmetrical fastening force on both sides of the middle groove, the insert and the holder, respectively, are shaped with an uneven number of grooves and ribs, respectively.

A cutting insert that has been formed in agreement with the present invention is well adapted to absorb both axial and radial forces. As an application example, this can be used by making double-functional inserts in accordance with figures 3, 6 and 7. By the straight front cutting edge 14 of this insert, and the curved side cutting edge 15 adjacent to both sides of the former, this insert may be used for transverse turning and also for axial copying, and as a form insert for radial turning. Thereby, a large number of different contours may be obtained.

Although not necessary, for certain applications with very large radial cutting forces, the ribs and grooves according to the invention may be combined with a rear support surface for the cutting insert, such as the surface 16 in figure 1.

## Claims

1. An arrangement for the fastening of cutting inserts (1, 1') on insert holders (2, 2') for cutting machining of primarily metals, the bottom surface (14) of the insert being provided with mutually, substantially parallel grooves (11) and the holding surface (3, 7) of the holder with corresponding, mutually, substantially parallel ribs (4), which are intended to fit into said grooves (11), and a fastening device (8) to be used to provide a means of fastening the insert to the holder
**characterized in that** there is a first gap (s) between the bottom surface (14) of the cutting insert and the holding surface (7) when the cutting insert is mounted in the holder, that the grooves (11) of the cutting insert (1,1') are directly pressed and not ground, the relationship of the distance between two adjacent grooves (11) perpendicularly to the grooves (11) and the width of a groove (11) on a level with the underside of the insert (1,1') is between 1:1 and 4:1 and similarly for two adjacent ribs (4) on the holding surface of the tool holder (2,2') and **in that** the said means of fastening is provided to exert a force substantially at the centre of the cutting insert (1,1') and substantially perpendicular to the bottom surface of the cutting insert (1,1') in such a way that the cutting inser (1,1') is pushed towards the holding surface of the tool holder, and that the surfaces (3, 7) and the ribs (4) are rigid and non-adjustable in relation to the tool holder (2) and the ribs (4) and grooves (11) have the form of truncated, isosceles triangles with top angles (α) on the ribs and bottom angles (β) in the grooves of between 40 and 80°.

2. Arrangement according to claim 1,
**characterized in that** there is always a second gap between the tops (6) of the ribs (4) and the bottoms (12) of the grooves (11).

3. Arrangement according to claims 1 and 2
**characterized in that** the holding surface (3,7) of the tool holder (2,2') includes a threaded hole (10) formed therein; the cutting insert including a through-hole (9) extending therethrough; the combination including a fastening screw (8) extending through the through-hole (9) and being threaded into the threaded hole (10).

4. Arrangement according to claim 3
**characterized in that** there is an odd number of grooves (11) in the bottom surface of the cutting insert and an odd number of ribs (4) on the holding surface of the tool holder (2,2') and that the fastening screw (8) passes through a central groove in the cutting insert (1,1') into a threaded hole in a central rib (10).

5. Cutting insert intended to be fastened on an insert holder (2,2') by the arrangement according to claims 1 and 2, the bottom surface(14) having mutually, substantially parallel grooves (11),
**characterized in that** the grooves (11) are directly pressed and not ground, and **in that** the relationship of the distance between two adjacent grooves (11) perpendicularly to the grooves (11) and the width of a groove (11) on a level with the underside of the cutting insert (1,1') is between 1:1 and 4:1 and that the grooves (11) have the form of a truncated, isosceles triangle with a bottom angle (β) in the grooves of between 40 and 80°.

6. Insert holder (2,2') intended to receive and support a cutting insert (1,1') by the arrangements according to claims 1 and 2, the holding surface (3, 7) having mutually, substantially parallel ribs(4),
**characterized in that** the relation between the distance between two adjacent ribs(7) perpendicularly to the ribs and the width of a rib on a level with the holding surface of the holder (2,2') is between 1:1 and 4:1 and the ribs (4) have the form of truncated, isosceles triangles with a top angle (α) on the ribs of between 40 and 80°.

## Patentansprüche

1. Anordnung für die Befestigung von Schneideinsätzen (1, 1') auf Einsatzhaltern (2, 2') für das schneidende Bearbeiten in erster Linie von Metallen, wobei die Bodenoberfläche (14) des Einsatzes mit gegenseitig im wesentlichen parallelen Nuten (11) und die Halteoberfläche (3, 7) des Halters mit entsprechenden, gegenseitig im wesentlichen parallelen Rippen (4) versehen sind, die vorgesehen sind, in die Nuten (11) zu passen, wobei eine Befestigungsvorrichtung (8) für die Schaffung von Befestigungsmitteln des Einsatzes am Halter verwendet wird,
**dadurch gekennzeichnet, daß** es einen ersten Spalt (s) zwischen der Bodenoberfläche (14) des Schneideinsatzes und der Haiteoberfläche (7) gibt, wenn der Schneideinsatz in dem Halter montiert ist, daß die Nuten (11) des Schneideinsatzes (1, 1') direkt gepreßt und nicht geschliffen sind, das Verhältnis des Abstandes zwischen zwei benachbarten Nuten (11) senkrecht zu den Nuten (11) und der Breite einer Nut (11) auf einer Höhe mit der Unterseite des Einsatzes (1, 1') zwischen 1:1 und 4:1 liegt und ähnlich für zwei benachbarte Rippen (4) auf der Halteoberfläche des Werkzeughalters (2, 2') und daß das Befestigungsmittel vorgesehen ist, um eine Kraft im wesentlichen an der Mitte des Schneideinsatzes (1, 1') und im wesentlichen senkrecht zur Bodenoberfläche des Schneideinsatzes (1,1') in solcher Weise auszuüben, daß der Schneideinsatz (1, 1') gegen die Halteoberfläche des Werkzeughalters gestoßen wird und daß die Oberflächen (3, 7) und die Rippen (4) starr und bezüglich des Werkzeughalters (2) in nicht einstellbarer Lage sind und die Rippen (4) und die Nuten (11) die Form von verjüngten, gleichschenkligen Dreiecken haben mit oberen Winkeln (α) auf den Rippen und Bodenwinkeln (β) in den Nuten zwischen 40 und 80°.

2. Anordnung nach Anspruch 1, **dadurch gekennzeichnet, daß** es immer einen zweiten Spalt zwischen den Oberseiten (6) der Rippen (4) und den Böden (12) der Nuten (11) gibt.

3. Anordnung nach den Ansprüchen 1 und 2, **dadurch gekennzeichnet, daß** die Halteoberfläche (3, 7) des Werkzeughalters (2, 2') ein in diesem gebildetes Gewindeloch (10) aufweist; der Schneideinsatz ein durchgehendes Loch (9) aufweist, welches sich durch diesen hindurch erstreckt; wobei die Kombination eine Befestigungsschraube (8) aufweist, welche sich durch das durchgehende Loch (9) erstreckt und in das Gewindeloch (10) eingeschraubt ist.

4. Anordnung nach Anspruch 3, **dadurch gekennzeichnet, daß** es eine ungerade Zahl von Nuten (11) in der Bodenoberfläche des Schneideinsatzes und eine ungerade Zahl von Rippen (4) auf der Halteoberfiäche des Werkzeughalters (2, 2') gibt und daß die Befestigungsschraube (8) durch eine mittlere Nut in dem Schneideinsatz (1, 1') in ein Gewindeloch in einer Mittenrippe (10) hindurchgeht.

5. Schneideinsatz für die Befestigung auf einem Einsatzhalter (2, 2') durch die Anordnung gemäß den Ansprüchen 1 und 2, wobei die Bodenoberfläche gegenseitig bzw. paarweise im wesentlichen parallele Nuten (11) hat,
**dadurch gekennzeichnet, daß** die Nuten (11) direkt gepreßt und nicht geschliffen sind und daß das Verhältnis des Abstandes zwischen zwei benachbarten Nuten (11) senkrecht zu den Nuten (11) und der Breite einer Nut (11) auf einer Höhe mit der Unterseite des Schneideinsatzes (11, 11') zwischen 1:1 und 4:1 liegt und daß die Nuten (11) die Form eines verjüngt zulaufenden, gleichschenkligen Dreiecks haben mit einem Bodenwinkel (β) in den Nuten von zwischen 40 und 80°.

6. Einsatzhalter (2, 2') für die Aufnahme und Abstützung eines Schneideinsatzes (1, 1') durch die Anordnungen gemäß den Ansprüchen 1 und 2, wobei die Halteoberfläche (3, 7) gegenseitig bzw. paarweise im wesentlichen parallele Rippen (4) hat,
**dadurch gekennzeichnet, daß** das Verhältnis zwischen dem Abstand zwischen zwei benachbarten Rippen (7) senkrecht zu den Rippen und der Breite einer Rippe auf einer Höhe mit der Halteoberfläche des Halters (2, 2') zwischen 1:1 und 4:1 liegt und die Rippen (4) die Form von verjüngt zulaufenden, gleichschenkligen Dreiecken haben mit einem oberen Winkel (α) auf den Rippen von zwischen 40 und 80°.

## Revendications

1. Aménagement pour la fixation d'outils de coupe rapportés (1, 1') sur des porte-outils (2, 2') pour l'usinage principalement de métaux, la surface inférieure (14) de l'outil étant pourvue de rainures essentiellement parallèles (11) et la surface de support (3, 7) du porte-outil étant pourvue de côtes correspondantes essentiellement parallèles (4), destinées à se loger dans les dites rainures (11), et un dispositif de fixation (8) devant être utilisé comme moyen de serrage de l'outil au porte-outil
**caractérisé en ce qu'**un premier espace (s) est ménagé entre la surface inférieure (14) de l'outil et la surface de support (7) quand l'outil est monté dans le porte-outil ; les rainures (11) de l'outil (1, 1') sont réalisées directement par passage sous la presse et ne sont pas meulées ; le rapport entre distance entre deux rainures adjacentes (11), mesurée perpendiculairement aux rainures (11), et largeur d'une rainure mesurée au niveau de la face inférieure de l'outil (1, 1') se situe entre 1 : 1 et 4 : 1 et il en est de même pour deux côtes adjacentes (4) sur la surface de support du porte-outil (2, 2') ; ledit moyen de fixation est prévu en vue d'appliquer une force essentiellement sur le centre de l'outil (1, 1') et essentiellement perpendiculairement à la surface inférieure de l'outil (1, 1') de manière à repousser l'outil (1, 1') vers la surface de support du porte-outil ; les surfaces (3, 7) et les côtes (4) sont rigides et non réglables par rapport au porte-outil (2) ; les côtes (4) et rainures (11) ont la forme de triangles isocèles tronqués ayant un angle supérieur (alpha) dans le cas des côtes, et un angle inférieur (bêta) dans le cas des rainures, situé entre 40 et 80 degrés.

2. Aménagement selon la revendication 1, **caractérisé en ce qu'**il y a toujours en espace entre les sommets (6) des côtes (4) et les fonds (12) des rainures (11).

3. Aménagement selon les revendications 1 et 2, **caractérisé en ce que** la surface de support (3, 7) du porte-outil (2, 2') comprend un trou taraudé (10) ; l'outil de coupe rapporté comprend un trou de passage (9) s'étendant à travers l'outil ; la combinaison outil et porte-outil comprenant une vis de fixation (8) s'étendant à travers le trou de passage (9) et se vissant dans le trou taraudé (10).

4. Aménagement selon la revendication 3, **caractérisé en ce qu'**il y a un nombre impair de rainures (11) sur la surface inférieure de l'outil et un nombre impair de côtes (4) sur la surface de support du porte-outil (2, 2') et la vis de fixation (8) passe par une rainure centrale dans l'outil (1, 1') pour s'insérer dans un trou taraudé (10) sur une côte centrale.

5. Outil de coupe rapporté destiné à être fixé sur un porte-outil (2, 2') par l'aménagement selon les revendications 1 et 2, la surface inférieure (14) comportant des rainures essentiellement parallèles (11)
**caractérisé en ce que** les rainures (11) sont passées directement à la presse et non meulées, le rapport entre distance entre deux rainures adjacentes (11), mesurée perpendiculairement aux rainures (11), et largeur d'une rainure (11) au niveau de la face inférieure de l'outil (1, 1') se situe entre 1 : 1 et 4 : 1, et les rainures (11) ont le profil de triangles isocèles tronqués d'angle inférieur (bêta) de 40 à 80 degrés.

6. Porte-outil (2, 2') destiné à recevoir et à supporter un outil de coupe rapporté (11) au moyen des aménagements selon les revendications 1 et 2, la surface de support (3, 7) comprenant des côtes essentiellement parallèles (4)
**caractérisé en ce que** le rapport entre distance entre deux côtes adjacentes (7), mesurée perpendiculairement aux côtes, et la largeur d'une côte au niveau de la surface de support du porte-outil (2, 2') se situe entre 1 : 1 et 4 : 1 et les côtes (4) ont le profil de triangles isocèles tronqués d'angle supérieur (alpha) de 40 à 80 degrés.
